# EUROPEAN PATENT SPECIFICATION

(11) **EP 0 520 507 B1**
(45) Date of publication and mention of the grant of the patent: **23.04.1997**
(21) Application number: 92110862.7
(22) Date of filing: 26.06.1992
(51) Int. Cl.: F23N 5/12, C22C 33/02

(54) **A flame rod structure and a compensating circuit and control method thereof**
Anordnung einer Flammenelektrode und Kompensationsschaltung und Regelungsverfahren dazu
Structure d'une électrode d'ionisation et circuit de compensation et son procédé de commande

(30) Priority: 28.06.1991 KR 1092691
(43) Date of publication of application: 30.12.1992
(60) Divisional application: 96106767.5
(73) Proprietor: SAMSUNG ELECTRONICS CO. LTD., Suwon-city, Kyungki-do (KR)
(72) Inventor: Cha, Soo Young, 302 Ho,44-88,Sungwonjootak ka-dong, Kyungki-Do (KR)
(74) Representative: Kahler, Kurt, Dipl.-Ing.

(56) References cited:
- EP-A- 0 101 249
- US-A- 3 504 181
- US-A- 3 563 817
- PATENT ABSTRACTS OF JAPAN vol. 9, no. 16 (P-329)23 January 1985 & JP-A-59 162 557 (EBARA NOBORU) 13 September 1984
- PATENT ABSTRACTS OF JAPAN vol. 9, no. 300 (M-433)27 November 1985 &JP-A-60 138 324 (HITACHI NETSUKIGU KK) 27 November 1985
- PATENT ABSTRACTS OF JAPAN vol. 8, no. 1368 (M-304)23 June 1984 & JP-A-59 035 718 (MITSUBISHI DENKI KK)
- PATENT ABSTRACTS OF JAPAN vol. 13, no. 143 (M-811)7 April 1989 & JP-A-63 306 310 (TOYOTA MOTOTR CORP)

## Description

### BACKGROUND OF THE INVENTION

The invention relates to a flame rod structure, a compensating circuit for promoting reliable operation of the flame rod structure and a control method thereof.

### Prior Art

Generally, a custom heater or heater and a combustion apparatus have used fossil fuels to control a number of calories generated during heating based on flame sensing, in which flame sensing requires a metal material which can endure relatively high heat. In other words, the flame rod structure is made in the form of a metal rod as a sensor for detecting the generated amount of heat oxygen concentration, firing and non-firing relative to the flame state of fossil fuels like petroleum. The flame rod detects a flame current of a predetermined voltage generated upon the combustion of fossil fuels, so that its equivalent circuit can be designed in a modelling pattern.

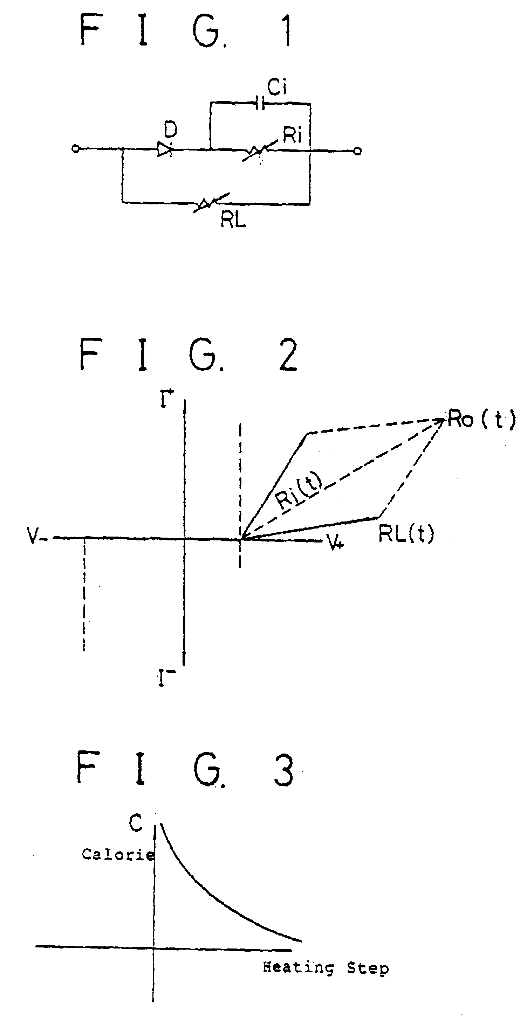

The flame current on the flame rod is first converted into a small amount of ion current according to the combination of the carbon and oxygen during the combustion of fossil fuels. Therefore, as shown in Fig. 1 the flame rod may be considered as an ideal diode because its ion current flows in one direction or is forward-biased. Then, the difference Ri of the flame resistance dependent upon the amount of heat, generated during heating is generated. The drift of charge components (relative to the time elapse) forces the flame rod to have a small amount of electrostatic capacity Ci according to the heating state. Also, the flame rod has a resistance value RL due to the leakage current generated by its structural factors and the combustion condition.

The characteristic of the voltage to the current of the flame rod is illustrated in Fig. 2. The forward characteristic of direct current (D.C.) represents the vector value of the leakage current value RL to the flame resistance value per hour. The flame resistance Ri is proportioned to the total amount of heat Ro( related with the temperature and the time), and the leakage current resistance RL is proportional to the value of R (the structural factor of the flame rod) multiplying the square of flame resistance Ri.

The electrical alternative current (A.C.) characteristic of the flame rod is shown in Fig. 3. That is, the relationship of the electrical A.C. to the flame current fluctuates with a heating change according to the amount of heat absorbed, which is determined by the combination rate according to the combustion ratio condition. The capacitance load C is inversely proportional by an exponential function to the additional amount of heat. It represents the equation of Ci ∝ Co(w), wherein w is the combustion ratio condition factor.

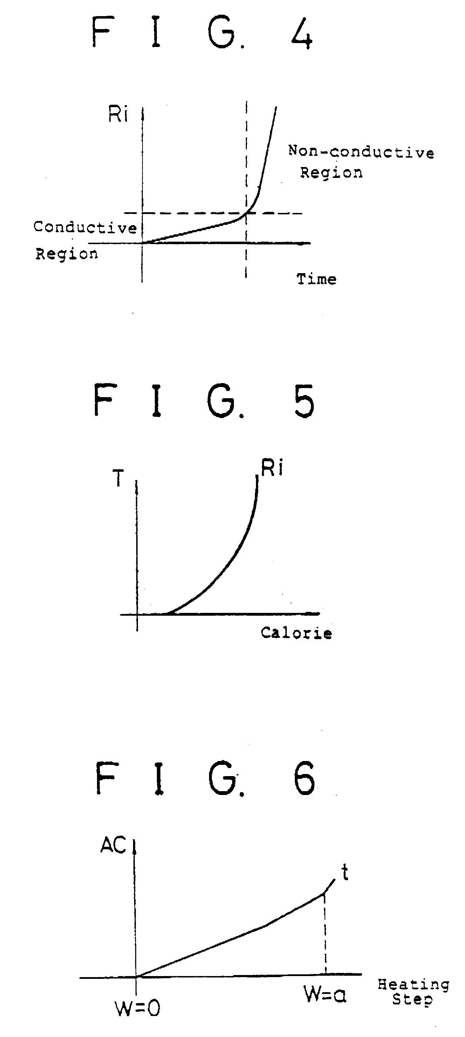

The flame rod is made of metal material serves as a conductor (medium) of the heat generated by the combustion flame, but has a conductivity characteristic which degrades according to the time elapsed and the temperature rise. It furthermore has problem with reliability of the exterior disturbance (the petroleum quality and the efficiency reduction of the complete combustion under a predetermined combustion ratio condition) and the electrical problems of its associated circuitry leading to the degradation of conductivity, thereby causing lost of the function of a conductivity medium after all as shown in Fig. 4.

The metal flame rod also increases its flame resistance Ri more and more according to the temperature rise, as shown in Fig. 5, because its conductivity characteristic accelerates the elastic collision of free electrons.

Additionally, the ion current converted from the flame current flows along the skin surface of the flame rod. The amount of charges is reduced according to the time elapsed, and the smaller the amount of heat is, the more the electrical AC characteristic of the skin current relative to the additional amount of heat is deteriorated as illustrated in Fig. 6.

As a result, the metal flame rod is under the relatively large exterior influences including the calories absorbed, the time and the temperature, so that its electrical characteristic is abruptly changed. It is appreciated that the metal flame rod is not ideal as a conductivity medium or device with respect to the associated circuitry.

The electric charge quantity Q_{F} is represented as follows:${\text{Q}}_{\text{F}} {\text{> αQ}}_{\text{C}} \text{α ≤ 1,}$ Wherein
- Q_{F}:: a quantity of the electric charge generated by the flame current
- Q_{C}:: a quantity of the electric charge supplied to the electrical network by the flame rod
- α :: the flame rod conductiviity σ (dependent on the temperature characteristic and the supplied electric charge quantity Q_{F})

On the other hand, the metal flame rod resistance value is abruptly increased in the non-conductor area based on the time characteristic curve thereby causing the electrical loss shown in Fig. 4. The flame resistance Ri relative to the time elapsed of the metal flame rod is dependent upon the fuel quality, but the increase of the flame resistance should be introduced only within the scope of the conductivity area. At that time, assuming that the skin current component has a maximum electric charge, the combustion of carbon material occurs adjacent to the skin surface of the flame rod to form a carbon cladding thereon, and the carbon cladding acts as a resistor to increase the flame resistance Ri, infinitely. Accordingly, it is noted that the flame rod may be remarkably improved by using materials which are not subject to the exterior influences like the amount of heat, the time and the temperature, etc.

Accordingly, it is an object of the present invention to provide a flame rod structure for restraining current from being generated at the skin surface to reduce the loss due to the variability of the structural interior impedance thereof.

It is a further object of the present invention to provide a flame rod structure having improved conductivity and temperature characteristic influenced by the flame resistance to reduce the skin surface current thereof.

It is another object of the invention to provide a flame rod structure acting as a sensor having the interior characteristic of high impedance which is minimally affected by the time elapsed and the exterior disturbance.

It is still another object of the invention to provide a compensating circuit for improving the function of the flame rod structure by applying the A.C. bias to the D.C. bias which is the generation factor of the skin current due to the interior impedance of the flame rod.

It is still another object of the invention to provide a method of controlling the compensating circuit for applying the A.C. bias to a flame rod structure.

These objects are solved by the independent claims 1, 2, 5, 6 and 7, respectively. Particular embodiments of the invention are set out in the dependent claims.

It is particularly advantageous to make the metal - semiconductor material of a ferrite composition (claim 3) or a material structure having a high interior impedance (claim 4).

### BRIEF DESCRIPTION OF THE DRAWINGS

The present invention will be described in detail below with reference to the attached drawings in which:
Fig. 1 is an electrical equivalent circuit of a metal flame rod in a burner using fossil fuels;
Fig. 2 is a graph illustrating an electrical characteristic related to the D.C. bias of the metal flame rod;
Fig. 3 is a graph illustrating an electrical characteristic related to the A.C. bias of the metal flame rod;
Fig. 4 is a graph illustrating the interior resistance value of the metal flame rod according to the time elapsed;
Fig. 5 is a graph illustrating the interior resistance of the metal flame rod related to the temperature rise;
Fig. 6 is a graph illustrating an electrical characteristic according to the additional amount of heat associated with the A.C. on-current;
Fig. 7 is a graph associated with the conductivity to the temperature illustrating an electrical characteristic of a flame rod structure which is constructed to have a metal and a semi-conduction material according to the present invention;
Fig. 8 is a view illustrating the flow of drift current associated with the electric field and direction of the flame rod structure according to the present invention;
Fig. 9 is an equivalent circuit view illustrating the electrical characteristic of the flame rod structure during sensing the flame;
Fig. 10 is a view illustrating one example for removing a low frequency and high impedance while varying the interior impedance of the flame rod structure;
Fig. 11 is a schematically view illustrating the concept of adding the A.C. bias to the D.C. bias, which is performed in the flame rod structure according to the principle of the present invention;
Fig. 12 is a block diagram illustrating a compensating circuit for improving the electric characteristic of the flame rod structure according to the principle of the present invention;
Fig. 13 is a flowchart illustrating a method for controlling the compensating circuit according to the principle of the present invention;
Fig. 14 is a waveform view illustrating a constant regulated voltage wave A, an excitation frequency wave B and a combination wave C thereof.

### DETAILED DESCRIPTION OF THE INVENTION

If the flame rod structure is able to facilitate the generation of the flame current, have heat resistant property and reduce the skin current, it can be supposed an ideal flame sensor. In other words, the material which causes the reduction of the skin current and the improvement of the conductivity and temperature characteristics related to the flame resistance Ri for overcoming the deficiencies disclosed in Figs. 4 and 5 is a semiconductor. Semiconductors are known as a conductivity medium having the excellent characteristics of the conductivity and the heat-resistanse property.

Therefore, an ideal flame sensor can exist in practice, if the defects of the metal flame rod are removed, and the merits of semi-conductor material are adapted to the flame rod. In order to realize the ideal flame sensor, the flame rod structure can be made of the combination of a metal and a semi-conductor.

The semiconductor material is heated to raise its temperature, so that the interior electrons become excited from a bound energy level to become free electrons. As a result, the flame component is charged due to the negative charge of negative ions, so that the electrons of the metal flame rod are combined with the positive holes of the semiconductor material to serve as charge components and promote a current drift corresponding to the heating temperature. This effect causes the charge components of the semi-conduction material to compensate for the skin current reduction of negative ions generated in aging by raising the temperature.

Therefore, the charge flux is shown as follows:${\text{Ju = n(E}}_{\text{C}} {\text{- µ + 3/2 K}}_{\text{B}} \text{T)(-µe)E}$ Wherein,
- Ju:: charge flux
- N:: the number of the semiconductor atoms
- E_{C}:: Energy level (conductivity band)
- K_{B}:: Boltzman constant
- T:: absolute temperature
- -µe:: mobility of electron
- E:: applied drift electric field strength

As shown in Fig. 7, the conductivity of the negative ion represents a state when the gradient in the non-conducting region of the high temperature is slightly smaller than that in the usage region.

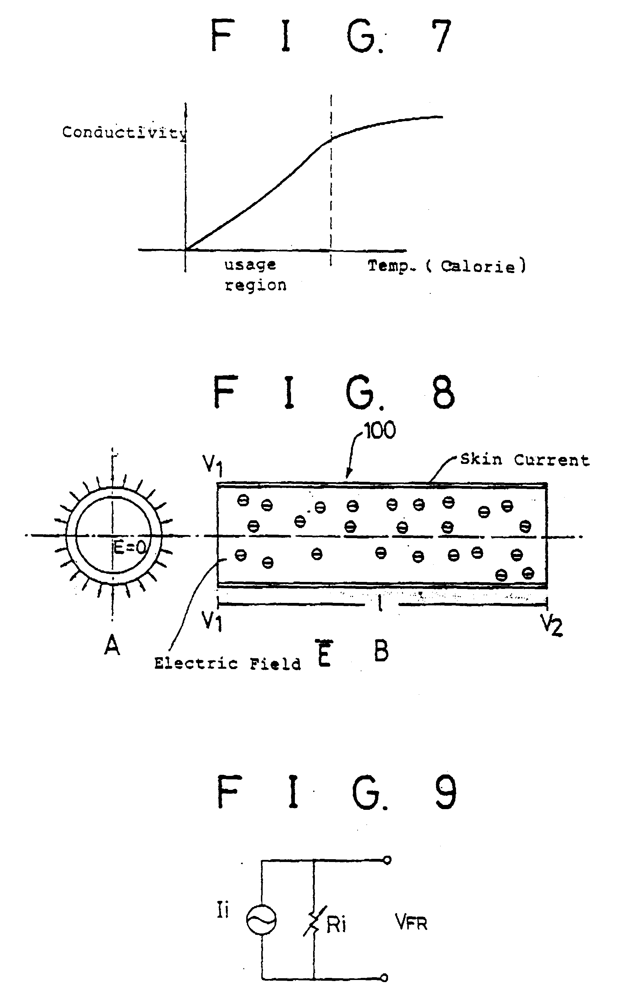

Fig. 8 illustrates a flame rod including a cross-sectional portion A and a lateral portion B. The flame rod is wrapped at a predetermined thickness by a semiconductor material. The electric field strength E at the center of the cross-sectional portion A is zero, and the cross-sectional electric field strength E is inversely proportional to a length 1 and proportional to the difference value obtained by subtracting the final voltage V₂ from the initial voltage V₁.${\text{E = (V}}_{\text{1}} {\text{-V}}_{\text{2}} \text{)/l}$

At this point, the metal electrons can be combined with the positive holes of the semiconductor material. The semiconductor material not only increases the interior mobility of the semiconductor material relative to the negative ions by forming the drift electric field, but also conducts the drift current due to the effect (Ju = 3/2 KT) obtained by the charge flux thereof according to the temperature rise. At that time, the drift current components compensate for the reduction of the skin current occurred in aging by the combustion flame skin resistance. It is believed not to influence the conductivity of the flame rod as a whole. Consequently, the semi-conduction material contributes to draw out the conductance current.

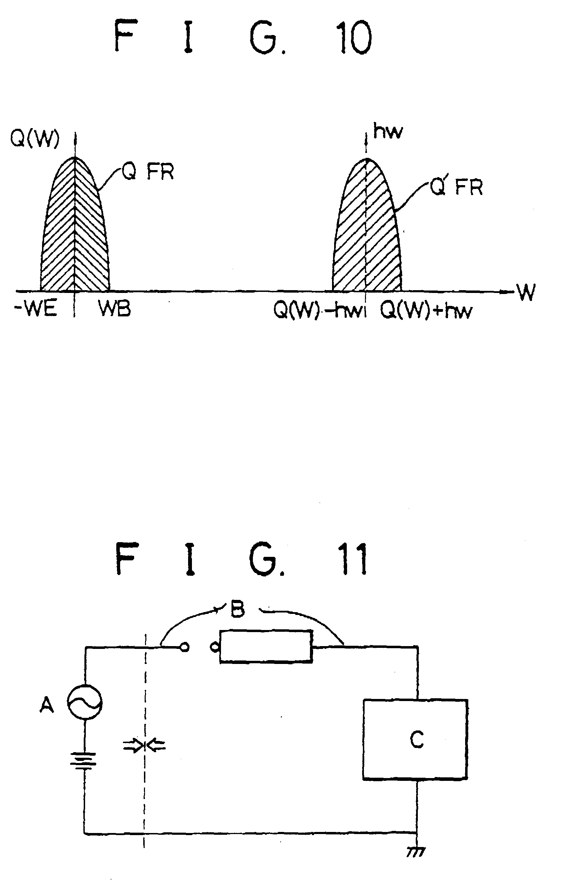

On the other hand, a fluid(air) vibration of the flame rod caused by a combustion flame causes the charge fluctuation, so that the conductivity of the medium constituting the flame rod is reduced, if an additional amount of heat is low as shown in Fig. 3. This flame rod during the combustion is represented as the equivalent circuit illustrated in Fig. 9. Herein, the D.C. direction is the same as that in Fig. 1. However, the flame rod relative to a current Ii as illustrating the A.C. electrical characteristic in Fig. 2 has difficulty in processing the electrical signal like a constant voltage regulated power source, because its interior impedance is relatively large and variable.

It is represented by the below equation.${\text{Zi amount of heat = V}}_{\text{FR}} \text{/Ji}$${\text{Zi(W)= V}}_{\text{FR}} \text{(W)/Ji(W)}$ Wherein,
- V_{FR}:: voltage of flame rod
- Ji:: current of flame rod
- W:: change of calorie

Consequently, the flame resistance Ri acts as an interior impedance at low frequencies as shown in Fig. 9. Thus, in order to transmit a larger signal the flame rod needs an associated bias/excitation circuit due to the variability of the resistance value. The method for processing the low frequency signal is illustrated in Fig. 10. It is noted from Fig. 10 that the low frequency band(between WE to WB) is added to the reference frequency h_{W} and then removed.

For example,${\text{Q'}}_{\text{FR}} {\text{= Q}}_{\text{FR}} {\text{∗ h}}_{\text{W}}$

Also, the interior impedance mainly occurs due to the skin resistance. Therefore, the impedance value of Zi can be decreased by properly applying the A.C. bias to a D.C. bias circuit without reducing the capacity component Ci generated by the flow of the skin current illustrated in Fig. 1.

For example,$\text{Zi = 1 / WCi}$

Therefore, the design condition of the bias circuit is as follows:

As illustrated in Fig. 11, the current loss at the skin surface should be prevented.

For example,${\text{Z}}_{\text{A}} {\text{= Z}}_{\text{B}} {\text{+ Z}}_{\text{C}}$${\text{Z}}_{\text{A}} {\text{(W) = Z}}_{\text{B}} {\text{(W) + Z}}_{\text{C}} \text{(W)}$ Wherein,
- Z_{A}:: interior impedance of excitation circuit
- Z_{B}:: combustion flame voltage + impedance Z of flame rod medium conductivity voltage
- Z_{C}:: impedance Z of circuit C

Accordingly, it is necessary to apply the maximum A.C. bias to circuit C so as to minimize the impedance value of Z _{A}.

As described above, if it is based on the flame rod structure and the associated circuit, the flame rod, a so called flame sensor, acts as a variable signal source during operation, so that its conductivity loss may be reduced, and processes the electrical signals associated with relative to the fractionized flame states.

As shown in Fig. 8, a flame rod structure 100 generates a drift current to increase the interior electron mobility as a conductor, thereby reducing the skin current and increases the quantity of drift current according to arise in temperature. The temperature rise increases the charge flux Ju by about 3/2 KT.

The flame rod structure of the present invention is produced through one of two methods.

One method is to prepare a semiconductor composition comprised of a micro-particular magnetic substance. For example, an iron-semiconductor alloy is prepared by using the micro-powder of silicon, germanium as a semiconductor and iron, nickel as a metal powder. For example, the typical silicon alloy is formed so that the silicon powder of 3-5 % by its weight ratio is sintered with the metal powder, crushed into the micro-particulars, melted with the predetermined adhesive agent, such as an elastic adhesive agent, cooled and pressed/moulded at a high pressure.

Preferably the metal-semiconductor material is a ferrite composition and preferably the metal-semiconductor material structure has a high interior impedance.

The flame rod structure is electrically adapted to a high frequency application like the clad structure of a laminate type on the metal flame rod as described below, so that it improves the electrical characteristic such as the conductivity in the high temperature condition and especially has a low core loss, a high permeability and a low eddy current loss due to the increasing of the electrical resistance.

The other flame rod structure is prepared by coating the semiconductor material at a predetermined thickners on the metal flame rod. Herein, metal-semiconductor junction portion constitutes the low-resistance region of a rectifying junction portion. Therefore, this junction portion can be used as a high-frequency diode. Meanwhile, this semiconductor(dielectric substance) surface provides an electrical conduction path in parallel to the volume portion of the metal flame rod, where the electrical conduction is characterized by the surface resistance value.

The dielectric substance of silicon causes the skin electrical conduction in a humid environment. At that time, if it is used as a flame sensor, the dielectric substance can not generate the charge drifting on the skin surface, thereby losing the conductivity function.

Additionally, the current at a high frequency is induced adjacent to the skin surface of the conductor or the flame rod structure, in which the skin depth is defined to reduce the current density by 1/e on the skin surface, and the skin resistance Rs is the D.C. resistance value of the conductor having the thickness of skin depth.

The surface(skin) resistance is as follows:$\text{Rs = p / δ = 1 / αδ}$ Wherein,
- p =: electrical resistance (Ω-m), δ = thickness (m)
- σ =: electrical conductivity (υ/m)

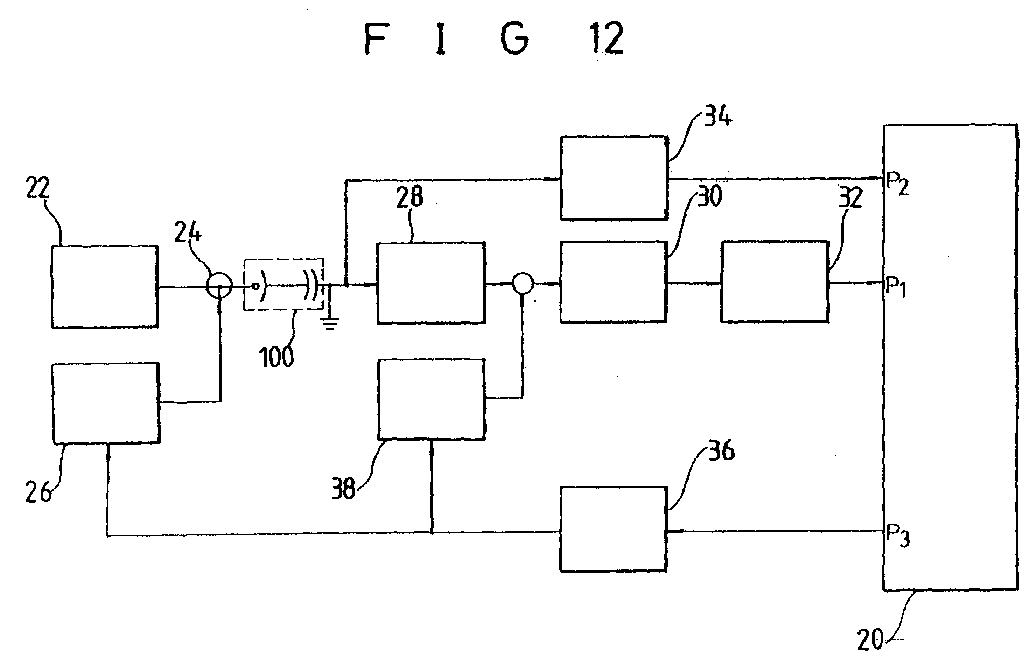

Fig. 12 is a block diagram of a compensating circuit according to the principle of the present invention.

The compensating circuit 10 is provided with a microprocessor 20 so as to generate the excitation frequency relative to the flame rod structure which is a flame sensor. In other words, the flame rod structure 100 is connected to a mixer 24 at one end thereof, which receives input signals from a reference voltage generating circuit 22 and an excitation signal generating circuit 26.

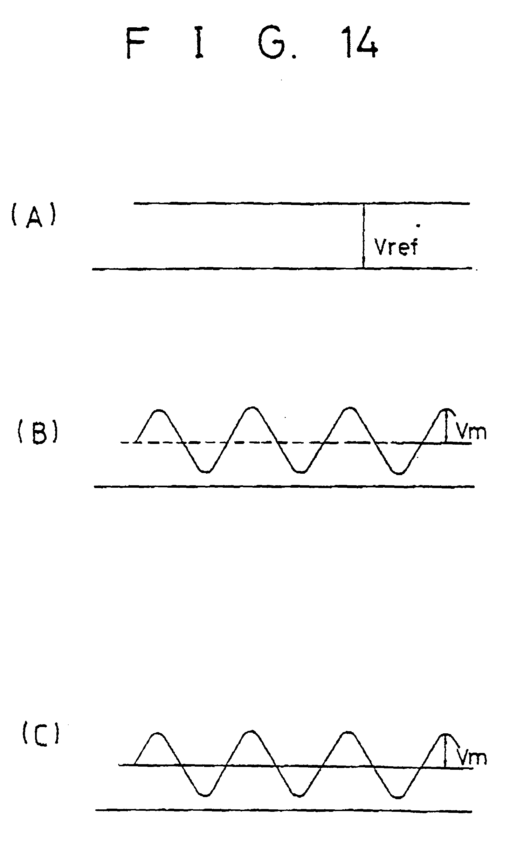

The reference voltage generating circuit 22 is formed as a constant voltage regulated circuit for applying the D.C. bias to the flame rod structure 100, in which the D.C. bias is the signal of a waveform A shown in Fig. 14.

The excitation frequency signal generating circuit 26 creates the excitation signal of an A.C. component having a predetermined frequency, which is adjusted by the microprocessor 20. The excitation signal appears as the waveform B of Fig. 14, wherein a voltage Vm or Vex(t) is represented as follows:$\text{Vex(t) = Vmsin (wt + Φ).}$

Thus, the mixer 24 generates the signal of the frequency band for improving the electrical characteristic of the flame rod structure 100, in which the signal has a waveform C adding the waveform A to the wave form B, which represents the A.C. component voltage as follows:$\text{Vc = Vref + Vmsin (wt + Φ)}$

The flame rod structure 100 senses the flame state in addition to receiving the signal from the mixer 24 and then generates the flame sensing voltage according to the medium material of the flame rod structure 100. The flame sensed signal is inputted to a flame signal detecting circuit 28 and an excitation frequency separating circuit 34.

The flame signal detecting circuit 28 convolutes(raises) the flame detected signal to a voltage according to the frequency and the additional amount of heat. Herein, the voltage is represented as follows:${\text{V}}_{\text{D}} {\text{= Vref + Vmsin (wt + Φ) ∗ V}}_{\text{FR}} \text{.}$

The convoluted flame detecting signal is applied to a low pass filter 30. The low pass filter 30 receives only the flame detecting signal V_{FR} by means of an attenuator 38 connected through a voltage-frequency converter 36 to the third A/D converting port P₃, because the attenuator 38 forces the signal from the flame signal detecting circuit 28 to be made into a voltage signal of the A.C. component adding the waveform A to the waveform B so as to remove the excitation signal component from the flame signal detecting circuit 28. Herein, the voltage signal is represented as follows:${\text{V}}_{\text{E}} {\text{= V}}_{\text{D}} {\text{- V}}_{\text{B}}$

Thus, the low pass filter 30 permits only the frequency component of the actual flame detecting signal to be applied to a waveform shaping circuit 32. That is, the flame detecting signal is represented as follows:${\text{V}}_{\text{F}} {\text{= V}}_{\text{FR}} {\text{= V}}_{\text{E}}$

The waveform shaping circuit 32 applies the predetermined rectangular wave signal to the first analoge/digital(A/D) converting port P₁ of the microprocessor 20. At the same time, the signal from the flame rod structure 100 is applied to the excitation frequency separating circuit 34. The excitation frequency separating circuit 34 removes the excitation frequency, converts it into a frequency-voltage signal and then applies this converted signal to the second A/D converting port P₂ of the microprocessor 20.

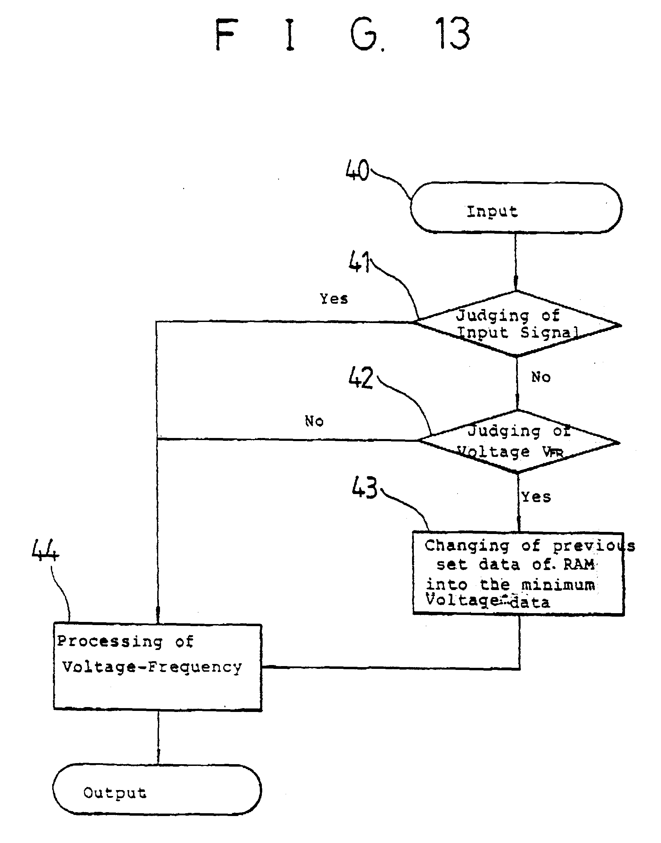

The microprocessor 20 controls the compensating circuit as shown in Fig. 13.

Referring to Fig. 13, at step 40 the microprocessor 20 receives the signals from the excitation signal separating circuit 31 and the waveform shaping circuit 32. Step 40 goes onto step 41 to judge whether the input frequency-voltage data is the frequency-voltage data previously stored in a RAM thereof or not. When they are equal, step 41 moves onto step 44 to convert the exication signal into a voltage-frequency signal and outputs the converted signal at the third A/D converting port P₃ to the voltage-frequency converter 36. Otherwise, step 41 goes onto step 42 to judge whether the flame detecting signal V_{FR} is equal to the minimum voltage previously stored in RAM of the microprocessor. If not, step 42 moves onto step 44 to convert the flame detecting signal into the voltage-frequency signal and output the converted signal at the third A/D converting port P₃ to the voltage-frequency converter 36. If the flame detecting signal V_{FR} is equal to the minimum voltage, step 42 goes onto step 43 to convert the previously set RAM data into the minimum voltage and then moves onto step 44.

Therefore, the microprocessor 20 outputs the voltage-frequency converting signal having the predetermined excitation frequency through the D/A converting port P₃ to the voltage-frequency converter 36 according to the heating step of the flame rod structure, in which the voltage-frequency converter 36 converts the signal of the microprocessor 20 into the voltage-frequency signal and supplies it to the excitation frequency signal generating circuit 26.

As described above, a compensating circuit of the present invention supplies the current of the A.C. component to a flame rod structure 100 in addition to the signal of the D.C. component, so that it prevents the flow of skin current from being reduced.

## Claims

1. A flame rod structure
**characterized** by
a composition containing a semiconductor material micro-powder of Silicon and Germanium and a metal micro-powder of Iron and Nickel, in which the semiconductor material is 3 - 5 % by its weight ratio, sintered with the metal powder, crushed into the micro-particulars, melted with an adhesive agent, cooled and pressed/moulded at a high pressure.

2. A flame rod structure
**characterized** by
a semiconductor material coated at a predetermined thickness on a metal body surface.

3. The flame rod structure according to claim 1,
wherein the metal-semiconductor material is a ferrite composition.

4. The flame rod structure according to claim 1,
wherein the metal-semiconductor material structure has a high interior impedance.

5. A circuit for compensating a skin current at a flame rod structure by applying an A.C. bias to a D.C. bias of a flame rod structure,
**characterized** by
means (22) for applying the D.C. bias to a flame rod structure (100) according to any one of claims 1 to 4;
means (26) for generating an excitation frequency signal which is the A.C. bias relative to the flame rod structure (100);
means (24) for mixing the signal of the D.C. bias applying means (22) with the signal of the excitation frequency generating means (26) and generating a signal of a predetermined frequency band;
means (28) for receiving the signal from the flame rod structure (100) to sense the flame;
means (38) for trapping only the excitation signal among the signals from the flame sensing means;
means (30) for filtering the signal from which the excitation signal has been trapped to pass only the actual sensing frequency of the flame signal;
means (32) for shaping the waveform of the filtered signal to output it to a first analog/digital converting port (P₁) of a microprocessor (20);
means (34) connected to the flame rod structure (100) for separating the excitation frequency and converting only the reference frequency corresponding to the excitation frequency into a voltage signal and outputting it to a second analog/digital converting port (P₂) of the microprocessor (20); said microprocessor (20) processes the signals received at the first and second analog/digital converting ports (P₁, P₂) thereof and generates a compensation signal; and
means (36) for converting the compensating signal from the microprocessor (20) into a voltage to frequency signal and supplying it to the excitation frequency generating circuit (26).

6. A method for compensating a skin current at a flame rod structure by applying an A.C. bias to a D.C. bias of a flame rod structure,
**characterized** by
the steps of:
applying the D.C. bias to a flame rod structure (100) according to any one of claims 1 to 4;
generating an excitation frequency signal which is the A.C. bias relative to the flame rod structure (100);
mixing the signal of the D.C. bias applying means (22) with the signal of the excitation frequency generating means (26) and generating a signal of a predetermined frequency band;
receiving the signal from the flame rod structure (100) to sense the flame;
trapping only the excitation signal among the signals from the flame sensing means;
filtering the signal from which the excitation signal has been trapped to pass only the actual sensing frequency of the flame signal;
shaping the waveform of the filtered signal to output it to a first analog/digital converting port (P₁) of a microprocessor (20);
separating the excitation frequency and converting only the reference frequency corresponding to the excitation frequency into the voltage signal and outputting it to a second analog/digital converting port (P₂) of the microprocessor (20); said microprocessor (20) processes the signals received at the first and second analog/digital converting ports (P₁, P₂) thereof and generates a compensating signal; and
converting the compensating signal from the microprocessor (20) into a voltage to frequency signal and supplying it to the excitation frequency generating circuit (26).

7. A method according to claim 6,
**characterized** by
the steps of:
determining (41) whether first data of the input frequency-voltage supplied at said first analog/digital converting port (P₁) of the microprocessor are equal to second frequency-voltage data previously stored;
determining (42) whether the amplitude of the flame sensing signal supplied as second data at said second analog/digital port (P₂) of the microprocessor is equal to a minimum detected voltage previously stored, when the first determination (41) was not positive;
producing an excitation frequency signal (44) if said first data and said second data are equal or the amplitude of the flame sensing signal is not equal to said minimum voltage; and
producing an excitation frequency signal according to a heating stage of the flame rod structure if said first data and said second data are not equal and the amplitude of the flame detecting signal is equal to the minimum voltage.

## Patentansprüche

1. Flammenelektrodenaufbau
**gekennzeichnet** durch
eine Zusammensetzung, die ein Feinstpulver aus einem Silicium- und Germanium-Halbleitermaterial und ein metallisches Feinstpulver aus Eisen und Nickel enthält, bei der das Halbleitermaterial 3 - 5 % seines Gewichtsanteils beträgt, mit dem Metallpulver gesintert wird, in Mikroteilchen zerdrückt wird, mit einem Klebemittel geschmolzen wird, abgekühlt und bei hohen Druck gepreßt/geformt wird.

2. Flammenelektrodenaufbau
**gekennzeichnet** durch
ein Halbleitermaterial, das mit einer festgelegten Dicke die Oberfläche eines metallischen Aufbaus bedeckt.

3. Flammenelektrodenaufbau gemäß Anspruch 1,
bei dem das Metall-Halbleiter-Material eine Ferrit-Zusammensetzung ist.

4. Flammenelektrodenaufbau gemäß Anspruch 1,
bei der der Metall-Halbleiter-Materialaufbau eine hohe Innenimpedanz aufweist.

5. Schaltung zum Kompensieren eines Oberflächenstroms an einem Flammenelektrodenaufbau durch Anlegen einer Wechselstromvorspannung an eine Gleichstromvorspannung eines Flammenelektrodenaufbaus,
**gekennzeichnet** durch
Mittel (22) zum Anlegen der Gleichstromvorspannung an einen Flammenelektrodenaufbau (100) gemäß irgendeinem der Ansprüche 1 bis 4;
Mittel (26) zum Erzeugen eines Anregungsfrequenzsignals, welches die Wechselstromvorspannung bezüglich des Flammenelektrodenaufbaus (100) ist;
Mittel (24) zum Mischen des Signals von den Gleichstromvorspannungsanlegemitteln (22) mit dem Signal von den Anregungsfrequenzerzeugungsmittteln (26) und zum Erzeugen eines Signals mit einem festgelegten Frequenzband;
Mittel (28) zum Empfangen des Signals vom Flammenelektrodenaufbau (100), um eine Flamme zu erfassen;
Mittel (38), um unter den Signalen von den Flammenerfassungsmitteln nur das Anregungssignal einzufangen;
Mittel (30) zum Filtern des Signals, von dem das Anregungssignal eingefangen wurde, um nur die eigentliche Erfassungsfrequenz des Flammensignals durchzulassen;
Mittel (32) zum Formen der Wellenform des gefilterten Signals, um es an einen ersten Analog-Digital-Wandleranschluß (P1) eines Mikroprozessors (20) auszugeben;
Mittel (34), die mit dem Flammenelektrodenaufbau (100) verbunden sind, um die Anregungsfrequenz zu trennen und um nur die Referenzfrequenz, die mit der Anregungsfrequenz übereinstimmt, in ein Spannungssignal umzuwandeln und um es an einen zweiten Analog-Digital-Wandleranschluß (P2) des Mikroprozessors (20) auszugeben; wobei der Mikroprozessor (20) die an seinen ersten und seinen zweiten Analog-Digital-Wandleranschluß (P1, P2) empfangenen Signale verarbeitet und ein Kompensationssignal erzeugt; und
Mittel (36), um das Kompensationssignal vom Mikroprozessor (20) in ein spannungsabhängiges Frequenzsignal umzuwandeln und um dieses an die Anregungsfrequenzerzeugungsschaltung (26) anzulegen.

6. Verfahren zum Kompensieren eines Oberflächenstroms an einem Flammenelektrodenaufbau durch Anlegen einer Wechselstromvorspannung an eine Gleichstromvorspannung eines Flammenelektrodenaufbaus,
**gekennzeichnet** durch
die folgenden Schritte:
Anlegen der Gleichstromvorspannung an einen Flammenelektrodenaufbau (100) gemäß irgendeinem der Ansprüche 1 bis 4;
Erzeugen eines Anregungsfrequenzsignals, welches bezüglich des Flammenelektrodenaufbaus (100) die Wechselstromvorspannung ist;
Mischen des Signals von einem Gleichstromvorspannungsanlegemittel (22) mit dem Signal von einem Anregungsfrequenzerzeugungsmittel (26) und Erzeugen eines Signals eines festgelegten Frequenzbandes;
Empfangen des Signals von dem Flammenelektrodenaufbau (100), um die Flamme zu erfassen;
Einfangen nur des Anregungssignals unter den Signalen von den Flammenerfassungsmitteln;
Filtern des Signals, von dem das Anregungssignal eingefangen wurde, um nur die eigentliche Erfassungsfrequenz vom Flammensignal durchzulassen;
Formen der Wellenform des gefilterten Signals, um es an einen ersten Analog-Digital-Wandleranschluß (P1) eines Mikroprozessors (20) auszugeben;
Trennen der Anregungsfrequenz und Umwandeln von nur der Referenzfrequenz, die mit der Anregungsfrequenz übereinstimmt, in ein Spannungssignal und Ausgeben dieses Signals an einen zweiten Analog-Digital-Wandleranschluß (P2) des Mikroprozessors (20); wobei der Mikroprozessor (20) die an seinem ersten und zweiten Analog-Digital-Wandleranschluß (P1, P2) empfangenen Signale verarbeitet und ein Kompensationssignal erzeugt; und
Umwandeln des Kompensationssignals vom Mikroprozessor (20) in ein spannungsabhängiges Frequenzsignal und Anlegen dieses Signals an eine Anregungsfrequenzerzeugungsschaltung (26).

7. Verfahren gemäß Anspruch 6,
**gekennzeichnet** durch
die folgenden Schritte:
Feststellen (41), ob erste Daten von der eingegebenen Eingangsfrequenzspannung, die an dem ersten Analog-Digital-Wandleranschluß (P1) des Mikroprozessors angelegt werden, gleich sind mit zweiten Frequenz-Spannungs-Daten, die zuvor gespeichert wurden;
Feststellen (42), ob die Amplitude des Flammenerfassungssignals, das am zweiten Analog-Digital-Anschluß (P2) des Mikroprozessors angelegt wird, gleich ist mit einer erfaßten, unteren Spannung, die zuvor gespeichert wurde, wenn die erste Feststellung (41) nicht positiv war;
Erzeugen eines Anregungsfrequenzsignals (44), wenn die ersten Daten und die zweiten Daten gleich sind oder die Amplitude des Flammenerfassungssignal nicht gleich ist mit der unteren Spannung; und
Erzeugen eines Anregungsfrequenzsignals in Abhängigkeit einer Heizstufe des Flammenelektrodenaufbaus, wenn die ersten und die zweiten Daten nicht gleich sind und die Amplitude des Flammenerfassungssignals gleich der unteren Spannung sind.

## Revendications

1. Structure d'électrode de détection de flamme
caractérisée par
une composition contenant une micro-poudre de matériau semiconducteur de silicium et de germanium et une micro-poudre métallique de fer et de nickel, dans laquelle le matériau de semiconducteur est d'un rapport en poids de 3 à 5 %, est fritté avec la poudre métallique, est écrasé en micro-particules, est fondu avec un agent adhésif, est refroidi et pressé/moulé à haute pression.

2. Structure d'électrode de détection de flamme
caractérisée par
un matériau de semiconducteur déposé suivant une épaisseur prédéterminée sur une surface d'un corps métallique.

3. Structure d'électrode de détection de flamme selon la revendication 1, dans laquelle le matériau métal-semiconducteur est une composition de ferrite.

4. Structure d'électrode de détection de flamme selon la revendication 1, dans laquelle la structure du matériau de métal-semiconducteur présente une impédance interne élevée.

5. Circuit destiné à compenser un courant d'effet de peau sur une structure d'électrode de détection de flamme en superposant une polarisation en courant alternatif sur une polarisation en courant continu d'une structure d'électrode de détection de flamme,
caractérisé par
un moyen (22) destiné à appliquer la polarisation en courant continu à une structure d'électrode de détection de flamme (100), selon l'une quelconque des revendications 1 à 4,
un moyen (26) destiné à générer un signal de fréquence d'excitation qui constitue la polarisation en courant alternatif relative à la structure d'électrode de détection de flamme (100),
un moyen (24) destiné à mélanger le signal du moyen d'application de la polarisation en courant continu (22) avec le signal du moyen de génération de fréquence d'excitation (26) et à générer un signal dans une bande de fréquence prédéterminée,
un moyen (28) destiné à recevoir le signal provenant de la structure d'électrode de détection de flamme (100) afin de détecter la flamme,
un moyen (38) destiné à ne piéger que le signal d'excitation parmi les signaux provenant du moyen de détection de flamme,
un moyen (30) destiné à filtrer le signal à partir duquel le signal d'excitation a été piégé, pour ne laisser passer que la fréquence de détection réelle du signal de flamme,
un moyen (32) destiné à mettre en forme la forme d'onde du signal filtré pour la sortir vers un premier accès de conversion analogique vers numérique (P₁) d'un microprocesseur (20),
un moyen (34) relié à la structure d'électrode de détection de flamme (100) afin de séparer la fréquence d'excitation et à ne convertir que la fréquence de référence correspondant à la fréquence d'excitation en un signal de tension et à le sortir vers un second accès de conversion analogique vers numérique (P₂) du microprocesseur (20), ledit microprocesseur (20) traitant les signaux reçus au niveau des premier et second accès de conversion analogique vers numérique (P₁, P₂) de celui-ci et générant un signal de compensation, et
un moyen (36) destiné à convertir le signal de compensation provenant du microprocesseur (20) en un signal tension vers fréquence et à l'appliquer au circuit de génération de fréquence d'excitation (26).

6. Procédé destiné à compenser le courant d'effet de peau d'une structure d'électrode de détection de flamme en superposant une polarisation en courant alternatif sur une polarisation en courant continu d'une structure d'électrode de détection de flamme,
caractérisé par les étapes consistant à :
appliquer la polarisation en courant continu à une structure d'électrode de détection de flamme (100), conformément à l'une quelconque des revendications 1 à 4,
générer un signal de fréquence d'excitation qui constitue la polarisation en courant alternatif relative à la structure d'électrode de détection de flamme (100),
mélanger le signal du moyen d'application de la polarisation en courant continu (22) avec le signal du moyen de génération de fréquence d'excitation (26) et générer un signal dans une bande de fréquence prédéterminée,
recevoir le signal provenant de la structure d'électrode de détection de flamme (100) afin de détecter la flamme,
ne piéger que le signal d'excitation parmi les signaux provenant du moyen de détection de flamme,
filtrer le signal à partir duquel le signal d'excitation a été piégé, pour ne laisser passer que la fréquence de détection réelle du signal de détection de flamme,
mettre en forme la forme d'onde du signal filtré pour la sortir vers un premier accès de conversion analogique vers numérique (P₁) d'un microprocesseur (20),
séparer la fréquence d'excitation et ne convertir que la fréquence de référence correspondant à la fréquence d'excitation en signal de tension et le sortir vers un second accès de conversion analogique vers numérique (P₂) du microprocesseur (20), ledit microprocesseur (20) traitant les signaux reçus au niveau des premier et second accès de conversion analogique vers numérique (P₁, P₂) de celui-ci et générant un signal de compensation, et
convertir le signal de compensation provenant du microprocesseur (20) en un signal tension vers fréquence et l'appliquer au circuit de génération de fréquence d'excitation (26).

7. Procédé selon la revendication 6,
caractérisé par les étapes consistant à :
déterminer (41) si les premières données de fréquence-tension d'entrée, appliquées audit premier accès de conversion analogique vers numérique (P1) du microprocesseur, sont égales aux secondes données fréquence-tension précédemment mémorisées,
déterminer (42) si l'amplitude du signal de détection de flamme, appliquée audit second accès analogique vers numérique (P₂) du microprocesseur, est égale à une tension détectée minimum précédemment mémorisée, lorsque la première détermination (41) n'était pas positive,
produire un signal de fréquence d'excitation (44) si lesdites premières données et lesdites secondes données sont égales ou si l'amplitude du signal de détection de flamme n'est pas égale à ladite tension minimum, et
produire un signal de fréquence d'excitation conformément au stade de chauffage de la structure d'électrode de détection de flamme si lesdites premières données et lesdites secondes données ne sont pas égales et si l'amplitude du signal de détection de flamme est égale à la tension minimum.
